# EUROPÄISCHE PATENTSCHRIFT

(11) **EP 3 710 900 B1**
(45) Veröffentlichungstag und Bekanntmachung des Hinweises auf die Patenterteilung: **06.03.2024**
(21) Anmeldenummer: 18799752.3
(22) Anmeldetag: 07.11.2018
(51) Int. Cl.: G05B 19/42, B25J 9/16

(54) **VERFAHREN UND SYSTEM ZUM VORGEBEN BZW. LERNEN EINES ROBOTERBEFEHLS**
METHOD AND SYSTEM FOR DEFINING OR LEARNING A ROBOT COMMAND
PROCÉDÉ ET SYSTÈME POUR LA PRESCRIPTION OU L'APPRENTISSAGE D'UNE INSTRUCTION POUR ROBOT

(30) Priorität: 17.11.2017 DE 102017010678
(43) Veröffentlichungstag der Anmeldung: 23.09.2020
(73) Patentinhaber: KUKA Deutschland GmbH, 86165 Augsburg (DE)
(72) Erfinder: BOCK, Jürgen, 86157 Augsburg (DE); KASPAR, Manuel, 86159 AUGSBURG (DE)
(74) Vertreter: Wallinger Ricker Schlotter Tostmann
(86) Internationale Anmeldenummer: PCT/EP2018/080399
(87) Internationale Veröffentlichungsnummer: WO 2019/096636

(56) Entgegenhaltungen:
- DE-A1-102016 009 030
- DE-B9-102008 062 622
- SERGEY LEVINE ET AL: "Learning hand-eye coordination for robotic grasping with deep learning and large-scale data collection", INTERNATIONAL JOURNAL OF ROBOTICS RESEARCH., Bd. 37, Nr. 4-5, 12. Juni 2017 (2017-06-12), Seiten 421-436, XP055566656, US ISSN: 0278-3649, DOI: 10.1177/0278364917710318

## Beschreibung

Die vorliegende Erfindung betrifft ein Verfahren und System zum Vorgeben eines Beaufschlagungsmuster-Befehls-Lexikons zur Eingabe wenigstens eines Roboterbefehls, ein Verfahren und System zur Eingabe wenigstens eines Roboterbefehls auf Basis des vorgegebenen Beaufschlagungsmuster-Befehls-Lexikons sowie ein Computerprogrammprodukt zur Durchführung des Verfahrens.

Aus der DE 10 2008 062 622 B9 ist eine Eingabe unterschiedlicher Befehle in eine Robotersteuerung mittels manuellem Aufprägen von Kräften, insbesondere manuellem Bewegen des Roboters, in unterschiedlichen Richtungen bekannt. Hierzu werden die aufgeprägten Kräfte bzw. Bewegungen mit gespeicherten Kräften bzw. Bewegungen eines vorgegebenen Beaufschlagungsmuster-Befehls-Lexikons verglichen.

DE 10 2016 009 030 A1 offenbart eine Vorrichtung für das maschinelle Lernen eines Arbeitsvorgangs eines Roboters zum Aufnehmen von Werkstücken.

Der Artikel SERGEY LEVINE et al.: "Learning hand-eye coordination for robotic grasping with deep learning and large-scale data collection", INTERNATIONAL JOURNAL OF ROBOTICS RESEARCH, Bd. 37, Nr. 4-5, 12. Juni 2017, Seiten 421-436, ISSN: 0278-3649, D01: 10.1177/0278364917710318, XP055566656, offenbart ein Lernverfahren zum Greifen von Objekten durch einen Roboter.

Aufgabe der vorliegenden Erfindung ist es, die Steuerung von Robotern zu verbessern.

Diese Aufgabe wird durch ein erfindungsgemäßes Verfahren mit den Merkmalen des Anspruchs 1 gelöst. Ansprüche 10, 11 stellen ein erfindungsgemäßes System bzw. Computerprogrammprodukt zur Durchführung eines hier beschriebenen Verfahrens unter Schutz. Die Unteransprüche betreffen vorteilhafte Weiterbildungen.

Nach einer hier offenbarten Ausführung weist ein Verfahren zum Vorgeben eines Beaufschlagungsmuster-Befehls-Lexikons mit einem oder mehreren Beaufschlagungsmuster(n) zur Eingabe (je) eines Roboterbefehls die Schritte auf:
- (jeweils) Erfassen von Roboterdaten;
- maschinelles Lernen des (jeweiligen) Beaufschlagungsmusters, in einer hier offenbarten Ausführung in einem Modell, auf Basis der erfassten Roboterdaten; und
- Zuordnen des (jeweiligen) maschinell gelernten Beaufschlagungsmusters zu dem (jeweiligen) Roboterbefehl.
In einer hier offenbarten Ausführung weist das Beaufschlagungsmuster-Befehls-Lexikon somit ein erstes Beaufschlagungsmuster und einen diesem zugeordneten ersten Roboterbefehl und wenigstens ein weiteres Beaufschlagungsmuster und einen diesem zugeordneten weiteren Roboterbefehl und das Verfahren die Schritte auf:
- Erfassen von ersten Roboterdaten;
- maschinelles Lernen des ersten Beaufschlagungsmusters, insbesondere in einem Modell, auf Basis der erfassten Roboterdaten;
- Zuordnen des maschinell gelernten ersten Beaufschlagungsmusters zu dem ersten Roboterbefehl;
- Erfassen von weiteren Roboterdaten;
- maschinelles Lernen des weiteren Beaufschlagungsmusters, insbesondere in einem, insbesondere dem, Modell, auf Basis der weiteren Roboterdaten; und
- Zuordnen des maschinell gelernten weiteren Beaufschlagungsmusters zu dem ersten oder einem weiteren Roboterbefehl.

Entsprechend wird in einer hier offenbarten Ausführung ein erstes maschinell gelerntes Beaufschlagungsmuster einem ersten Roboterbefehl und wenigstens ein weiteres maschinell gelerntes Beaufschlagungsmuster dem ersten oder einem weiteren Roboterbefehl zugeordnet, in einer hier offenbarten Ausführung ordnet das Modell ein erstes maschinell gelerntes Beaufschlagungsmuster einem ersten Roboterbefehl und wenigstens ein weiteres maschinell gelerntes Beaufschlagungsmuster dem ersten oder einem weiteren Roboterbefehl zu. Allgemein können in einer hier offenbarten Ausführung n Beaufschlagungsmuster m Roboterbefehlen zugeordnet werden, wobei m ≤ n. Insbesondere können somit in einer hier offenbarten Ausführung einem oder mehreren Roboterbefehlen (jeweils) zwei oder mehr Beaufschlagungsmuster bzw. zwei oder mehr Beaufschlagungsmuster demselben Roboterbefehl zugeordnet sein bzw. werden und/oder einem oder mehreren Roboterbefehlen (jeweils) genau ein Beaufschlagungsmuster zugeordnet sein bzw. werden.

Hierdurch können das bzw. die Beaufschlagungsmuster des Beaufschlagungsmuster-Befehls-Lexikons verglichen mit der expliziten Programmierung, insbesondere Parametrierung, entsprechender Muster vorteilhaft vorgegeben werden, insbesondere rascher, in einfacherer und/oder zuverlässigerer Weise und/oder komplexere Beaufschlagungsmuster.

In einer hier offenbarten Ausführung wird der (erste und/oder der weitere) zuzuordnende Roboterbefehl (bereits) bei dem maschinellen Lernen des Beaufschlagungsmusters zugeordnet, in einer hier offenbarten Ausführung wird bzw. ist er vor Erfassen der (ersten bzw. weiteren) Roboterdaten vorgegeben. In einer Weiterbildung wird, insbesondere visuell und/oder akustisch, einem oder mehreren Bedienpersonen der (jeweilige) Roboterbefehl signalisiert und/oder die Bedienperson(en jeweils) zum Aufprägen des (entsprechenden) Beaufschlagungsmusters aufgefordert.

Hierdurch kann in einer hier offenbarten Ausführung ein vorgegebenes Lexikon von Roboterbefehlen rasch und/oder zuverlässig abgearbeitet werden.

In einer hier offenbarten Ausführung wird der (erste und/oder der weitere) zuzuordnende Roboterbefehl (erst) nach dem maschinellen Lernen des (ersten bzw. weiteren) Beaufschlagungsmusters zugeordnet, insbesondere vorgegeben, in einer Weiterbildung auf Basis einer Eingabe des (jeweiligen) Roboterbefehls durch eine Bedienperson.

Hierdurch kann in einer hier offenbarten Ausführung die Zuordnung des bzw. der Beaufschlagungsmuster(s) zu dem bzw. den Roboterbefehl(en) optimiert und/oder zu einem späteren Zeitpunkt ausgeführt und so die erforderliche Aufenthaltszeit am Roboter verkürzt werden.

Beide hier offenbarten Ausführungen können in einer Weiterbildung kombiniert sein, wobei der Roboterbefehl dem Beaufschlagungsmuster bereits beim maschinellen Lernen zugeordnet wird und nach dem maschinellen Lernen des Beaufschlagungsmusters diese Zuordnung des vorgegebenen Roboterbefehls zu dem Beaufschlagungsmuster modifiziert, insbesondere dem Beaufschlagungsmuster anstelle dieses zunächst zugeordneten Roboterbefehls ein anderer Roboterbefehl und/oder diesem Roboterbefehl anstelle des ihm zunächst zugeordneten ein anderes maschinell gelerntes Beaufschlagungsmuster zugeordnet wird.

In einer hier offenbarten Ausführung weist der (erste und/oder der weitere) Roboterbefehl (jeweils) einen Programmierbefehl zum Erstellen oder Modifizieren eines Arbeitsprogramms des Roboters auf. Mit anderen Worten kann in einer hier offenbarten Ausführung der Roboter durch Roboterbefehle des Beaufschlagungsmuster-Befehls-Lexikons (um)programmiert werden. In einer hier offenbarten Ausführung kann eine Bedienperson beim manuellen Teachen des Roboters durch entsprechende Beaufschlagung des Roboters mit einem gelernten Beaufschlagungsmuster an einer entsprechenden Stelle des geteachten Arbeitsprogramms einen Programmbefehl einfügen oder modifizieren, insbesondere parametrieren.

Zusätzlich oder alternativ weist in einer hier offenbarten Ausführung der (erste und/oder der weitere) Roboterbefehl (jeweils) ein Steuerkommando zum, insbesondere unmittelbaren, Bedienen des Roboters und/oder einer Roboterperipherie auf. Entsprechend kann in einer hier offenbarten Ausführung der Roboter durch Roboterbefehle des Beaufschlagungsmuster-Befehls-Lexikons online, insbesondere während der Abarbeitung eines Arbeitsprogramms, bedient werden. In einer hier offenbarten Ausführung kann eine Bedienperson bei der Abarbeitung eines Arbeitsprogramms des Roboters durch entsprechende Beaufschlagung des Roboters mit einem gelernten Beaufschlagungsmuster eine Roboterperipherie bedienen, beispielsweise ein robotergeführtes Werkzeug aktivieren oder deaktivieren, und/oder einen Betriebsmodus des Roboters verändern, insbesondere von einem Betriebsmodus in einen anderen Betriebsmodus umschalten, in einer hier offenbarten Ausführung einen Stopp, insbesondere Notstopp, auslösen.

In einer hier offenbarten Ausführung wird der Roboter zum Vorgeben des Beaufschlagungsmuster-Befehls-Lexikons in einen Vorgabe-Betriebsmodus umgeschaltet, in einer hier offenbarten Ausführung auf Basis einer Erfassung einer, insbesondere manuellen, Eingabe (durch) eine(r) Bedienperson.

Hierdurch kann in einer hier offenbarten Ausführung das Beaufschlagungsmuster-Befehls-Lexikon konzentriert vorgegeben werden.

Zusätzlich oder alternativ wird in einer hier offenbarten Ausführung zum Vorgeben des Beaufschlagungsmuster-Befehls-Lexikons, insbesondere optisch und/oder akustisch, ein Startsignal und/oder ein Stoppsignal des Erfassens der Roboterdaten an eine Bedienperson ausgegeben.

Hierdurch kann in einer hier offenbarten Ausführung das Erfassen der Roboterdaten und/oder das Aufprägen des bzw. der Beaufschlagungsmuster durch die Bedienperson verbessert werden.

Zusätzlich oder alternativ werden in einer hier offenbarten Ausführung zum Vorgeben des Beaufschlagungsmuster-Befehls-Lexikons mehrere Sequenzen von Roboterdaten zur Vor- bzw. Eingabe desselben Beaufschlagungsmusters und/oder Roboterbefehls erfasst, insbesondere mehrere Sequenzen von ersten Roboterdaten zur Eingabe des ersten Beaufschlagungsmusters bzw. Roboterbefehls und/oder mehrere Sequenzen von weiteren Roboterdaten zur Eingabe des weiteren Beaufschlagungsmusters bzw. Roboterbefehls.

Hierdurch kann in einer hier offenbarten Ausführung das maschinelle Lernen verbessert werden.

In einer Weiterbildung werden dabei mehrere Sequenzen von Roboterdaten zur Eingabe desselben Beaufschlagungsmusters bzw. Roboterbefehls erfasst, die durch verschiedene Bedienpersonen bewirkt werden bzw. sind.

Hierdurch können in einer hier offenbarten Ausführung anschließend Beaufschlagungsmuster verschiedener Bedienpersonen demselben Roboterbefehl zugeordnet bzw. als dasselbe Beaufschlagungsmuster identifiziert bzw. kann in einer hier offenbarten Ausführung das Modell anschließend Beaufschlagungsmuster verschiedener Bedienpersonen demselben Roboterbefehl zuordnen bzw. als dasselbe Beaufschlagungsmuster erkennen und so die Eingabe von Roboterbefehlen verbessert werden.

Zusätzlich oder alternativ wird in einer Weiterbildung wenigstens eine vorgegebene Mindestzahl von Sequenzen zur Eingabe desselben Beaufschlagungsmusters bzw. Roboterbefehls erfasst, die in einer hier offenbarten Ausführung wenigstens fünf, insbesondere wenigstens zehn betragen kann.

Hierdurch kann in einer hier offenbarten Ausführung die Zuverlässigkeit verbessert werden.

Zusätzlich oder alternativ werden in einer Weiterbildung Sequenzen zur Eingabe desselben Beaufschlagungsmusters bzw. Roboterbefehls erfasst, bis eine vorgegebene Zuverlässigkeit für das (zugeordnete) Beaufschlagungsmuster bzw. dessen Identifizierung, insbesondere durch das Modell bzw. des Modells, ermittelt, in einer hier offenbarten Ausführung prognostiziert, wird.

Hierdurch kann in einer hier offenbarten Ausführung die Anzahl der Sequenzen adaptiv ermittelt bzw. sukzessive erhöht werden, bis mindestens die vorgegebene Zuverlässigkeit erreicht ist. Auf diese Weise kann in einer hier offenbarten Ausführung die Anzahl der zu erfassenden Sequenzen minimiert werden.

In einer hier offenbarten Ausführung wird das (erste und/oder das weitere) Beaufschlagungsmuster auch auf Basis von diesem bzw. dem Roboterbefehl nicht zuzuordnenden Roboterdaten maschinell gelernt, die in einer Weiterbildung vorgegeben und/oder erfasst sein bzw. werden können. Mit anderen Worten werden in einer hier offenbarten Ausführung (bewußt bzw. gezielt) auch Negativbeispiele zum Lernen des bzw. der Beaufschlagungsmuster(s), insbesondere zur Differenzierung gegen andere Beaufschlagungsmuster des Beaufschlagungsmuster-Befehls-Lexikons und/oder Beaufschlagungsmuster, denen kein Roboterbefehl zugeordnet ist, verwendet. Diese können bei entsprechender Beaufschlagung durch die Bedienperson in einer bewusst bzw. absichtlich von dem zu erlernenden Beaufschlagungsmuster abweichenden Weise erfasst oder auch werkseitig vorgegeben werden. In einer Weiterbildung wird bzw. werden die Bedienperson(en) jeweils, insbesondere visuell und/oder akustisch, zum Bewirken solcher Roboterdaten aufgefordert, denen der Roboterbefehl nicht zugeordnet werden soll.

In einer hier offenbarten Ausführung weist das maschinelle Lernen Deep Learning, insbesondere ein Trainieren und/oder Validieren eines neuronalen Netzes, auf. Entsprechend kann das Modell in einer hier offenbarten Ausführung ein neuronales Netz aufweisen, insbesondere sein, welches in den Roboterdaten gelernte Beaufschlagungsmuster erkennt und diese den entsprechenden Roboterbefehlen zuordnet bzw. hierzu verwendet wird. Das Modell und/oder ein Lernmittel zum maschinellen Lernen des bzw. der Beaufschlagungsmuster, insbesondere in dem Modell, kann in einer hier offenbarten Ausführung teilweise oder vollständig in einer Steuerung des Roboters und/oder separat hiervon angeordnet sein und/oder mit einem Erfassungsmittel zum Erfassen der Roboterdaten über eine OPC Architektur, insbesondere eine OPC UA Architektur, insbesondere eine OPC UA Pub/Sub Architektur, kommunizieren.

Nach einer hier offenbarten Ausführung weist ein Verfahren zur Eingabe wenigstens eines Roboterbefehls die Schritte auf:
- Erfassen von Roboterdaten; und
- Ermitteln eines Roboterbefehls, der einem Beaufschlagungsmuster eines Beaufschlagungsmuster-Befehls-Lexikons zugeordnet ist, das nach einem hier beschriebenen Verfahren vorgegeben (worden) ist, wobei der Roboterbefehl auf Basis der erfassten Roboterdaten mithilfe des Modells mit dem maschinell gelernten Beaufschlagungsmuster ermittelt wird.

Hierdurch wird in einer hier offenbarten Ausführung vorteilhaft das Modell mit dem bzw. den maschinell gelernten Beaufschlagungsmuster(n) nach dem maschinellen Lernen zur Eingabe von Roboterbefehlen verwendet.

In einer hier offenbarten Ausführung wird der Roboter zur Eingabe eines Roboterbefehls des Beaufschlagungsmuster-Befehls-Lexikons in einen Eingabe-Betriebsmodus umgeschaltet, in einer hier offenbarten Ausführung auf Basis einer Erfassung einer, insbesondere manuellen, Eingabe (durch) eine(r) Bedienperson, eines Sensorsignals und/oder durch ein Arbeitsprogramm. In einer Weiterbildung wird durch das Arbeitsprogramm und/oder Sensorsignal in den Eingabe-Betriebsmodus umgeschaltet, wenn eine Eingabe eines Roboterbefehls durch eine Bedienperson erforderlich ist bzw. wird. Zusätzlich oder alternativ wird in einer hier offenbarten Ausführung in dem Eingabe-Betriebsmodus eine Bedienperson, insbesondere visuell und/oder akustisch, zum Eingeben eines Roboterbefehls durch Aufprägen eines Beaufschlagungsmusters des Beaufschlagungsmuster-Befehls-Lexikons aufgefordert.

In einer hier offenbarten Ausführung weist das (erste und/oder das weitere) Beaufschlagungsmuster des Beaufschlagungsmuster-Befehls-Lexikons (jeweils) einen Zeitverlauf von Roboterdaten, in einer Weiterbildung (Werte des- bzw. derselben Parameter(s) der) Roboterdaten für verschiedene Zeitpunkte, in vorgegebenen Zeitabständen und/oder über einem vorgegebenen Zeitraum, auf.

Hierdurch können in einer hier offenbarten Ausführung komplexere und/oder intuitivere Beaufschlagungsmuster genutzt werden.

Zusätzlich oder alternativ weist in einer hier offenbarten Ausführung das (erste und/oder das weitere) Beaufschlagungsmuster des Beaufschlagungsmuster-Befehls-Lexikons (jeweils) Schwellwerte, insbesondere (erforderliche) Minimal- und/oder (zulässige) Maximalwerte, für Roboterdaten auf. So kann beispielsweise ein Beaufschlagungsmuster eine Kraftbeaufschlagung und/oder Auslenkung mit wenigstens einem Minimal- und/oder höchstens einem Maximalwert, insbesondere (jeweils einem Minimal- und/oder höchstens einem Maximalwert) über einen oder mehrere vorgegebenen Zeiträume und/oder (jeweils einem Minimal- und/oder höchstens einem Maximalwert) in eine oder nacheinander in mehrere vorgegebene Richtungen oder dergleichen, aufweisen, insbesondere sein.

Solche Schwellwerte können in einer hier offenbarten Ausführung durch das maschinelle Lernen besonders vorteilhaft vorgegeben werden, insbesondere im Vergleich zu einem expliziten Parametrieren entsprechender Werte.

In einer hier offenbarten Ausführung wird das (erste und/oder das weitere) Beaufschlagungsmuster des Beaufschlagungsmuster-Befehls-Lexikons (jeweils) durch manuelle Kraftbeaufschlagung, insbesondere Bewegen, eines oder mehrerer Glieder des Roboters durch wenigstens eine Bedienperson aufgeprägt.

Hierdurch können in einer hier offenbarten Ausführung komplexere und/oder intuitivere Beaufschlagungsmuster genutzt werden.

In einer hier offenbarten Ausführung weisen die zum Vorgeben des (ersten und/oder des weiteren) Beaufschlagungsmusters und/oder zur Eingabe des (ersten und/oder des weiteren) Roboterbefehls erfassten Roboterdaten (jeweils) wenigstens eine Pose einer oder mehrerer roboterfesten Referenz(en), insbesondere wenigstens eine ein-, zwei- oder dreidimensionale Position und/oder eine ein-, zwei- oder dreidimensionale Orientierung der roboterfesten Referenz(en) im kartesischen Raum und/oder wenigstens eine Gelenk- bzw. Achs- und/oder Antriebskoordinate bzw. -stellung wenigstens eines Gelenks bzw. Antriebs bzw. wenigstens einer Achse des Roboters, und/oder eine, insbesondere erste und/oder höhere, Zeitableitung dieser Pose(n) auf.

Hierdurch können in einer hier offenbarten Ausführung vorteilhaft manuell aufgeprägte Bewegungsmuster gelernt bzw. zur Eingabe von Roboterbefehlen genutzt werden, wobei die genannten Roboterdaten vorteilhafterweise jeweils besonders signifikant sind.

Zusätzlich oder alternativ weisen in einer hier offenbarten Ausführung die zum Vorgeben des (ersten und/oder des weiteren) Beaufschlagungsmusters und/oder zur Eingabe des (ersten und/oder des weiteren) Roboterbefehls erfassten Roboterdaten (jeweils) wenigstens eine Kraft an einer oder mehreren roboterfesten Referenz(en), insbesondere eine Größe und/oder Richtung der Kraft, auf, wobei vorliegend allgemein zur kompakteren Darstellung auch antiparallele Kräftepaare bzw. Drehmomente verallgemeinernd als Kräfte bezeichnet werden.

Hierdurch können in einer hier offenbarten Ausführung vorteilhaft Muster manuell aufgeprägter Kräfte gelernt bzw. zur Eingabe von Roboterbefehlen genutzt werden.

Zusätzlich oder alternativ weisen in einer hier offenbarten Ausführung die zum Vorgeben des (ersten und/oder des weiteren) Beaufschlagungsmusters und/oder zur Eingabe des (ersten und/oder weiteren) Roboterbefehls erfassten Roboterdaten (jeweils) wenigstens eine Antriebsgröße eines oder mehrerer Antriebe des Roboters auf, insbesondere einen Motorstrom und/oder eine Motorspannung.

Hierdurch können in einer hier offenbarten Ausführung vorteilhaft jeweils besonders signifikante Roboterdaten genutzt werden.

In einer hier offenbarten Ausführung weisen die zum Vorgeben des (ersten und/oder des weiteren) Beaufschlagungsmusters und/oder zur Eingabe des (ersten und/oder des weiteren) Roboterbefehls erfassten Roboterdaten (jeweils) einen Zeitverlauf der bzw. einer oder mehrerer der Pose(n), Kraft bzw. Kräfte und/oder Antriebsgröße(n) auf, in einer Weiterbildung (Werte des- bzw. derselben Parameter(s)) für verschiedene Zeitpunkte, in vorgegebenen Zeitabständen und/oder über einem vorgegebenen Zeitraum.

Insbesondere zur Verarbeitung solcher Zeitverläufe ist ein maschinelles Lernen, insbesondere ein neuronales Netz, besonders vorteilhaft.

Zusätzlich oder alternativ weisen in einer hier offenbarten Ausführung die zum Vorgeben des (ersten und/oder des weiteren) Beaufschlagungsmusters und/oder zur Eingabe des (ersten und/oder des weiteren) Roboterbefehls erfassten Roboterdaten (jeweils) einen Betriebsmodus, insbesondere ein aktuelles Arbeitsprogramm des Roboters, auf.

Dem liegt die Idee zugrunde, dasselbe Beaufschlagungsmuster in verschiedenen Betriebsmodi des Roboters zur Eingabe unterschiedlicher Roboterbefehle zu verwenden. Hierdurch kann in einer hier offenbarten Ausführung die Mächtigkeit des Beaufschlagungsmuster-Befehls-Lexikons vergrößert werden.

In einer hier offenbarten Ausführung werden die zum Vorgeben des (ersten und/oder des weiteren) Beaufschlagungsmusters und/oder zur Eingabe des (ersten und/oder des weiteren) Roboterbefehls erfassten Roboterdaten (jeweils) wenigstens teilweise durch einen oder mehrere roboterseitige Sensor(en) erfasst.

Hierdurch können in einer hier offenbarten Ausführung vorteilhaft Sensoren zur Steuerung und/oder Überwachung des Roboters und zusätzlich zum Vorgeben von Beaufschlagungsmustern bzw. zur Eingabe von Roboterbefehlen bzw. Erfassen entsprechender Roboterdaten hierzu verwendet werden.

In einer hier offenbarten Ausführung werden zur Eingabe eines Roboterbefehls, insbesondere in dem Eingabe-Betriebsmodus, für mehrere, insbesondere einander zeitlich teilweise überdeckende, Zeiträume jeweils eine Sequenz von Roboterdaten erfasst und mithilfe des Modells ein Roboterbefehl auf Basis einer der erfassten Sequenzen ermittelt, in einer hier offenbarten Ausführung auf Basis einer zeitlich ersten der erfassten Sequenzen, für die ein Beaufschlagungsmuster des Beaufschlagungsmuster-Befehls-Lexikons bzw. der diesem zugeordnete Roboterbefehl, insbesondere mit wenigstens einer vorgegebenen Zuverlässigkeit, ermittelt, insbesondere identifiziert, wird bzw. werden kann.

Nach einer hier offenbarten Ausführung ist ein System zum Vorgeben des Beaufschlagungsmuster-Befehls-Lexikons, insbesondere hard- und/oder software-, insbesondere programmtechnisch, zur Durchführung eines hier beschriebenen Verfahrens eingerichtet und/oder weist auf:
- Mittel zum Erfassen von Roboterdaten;
- Mittel zum maschinellen Lernen des Beaufschlagungsmusters, insbesondere in einem Modell, auf Basis der erfassten Roboterdaten; und
- Mittel zum Zuordnen des maschinell gelernten Beaufschlagungsmusters zu dem Roboterbefehl.

In einer hier offenbarten Ausführung weist das System bzw. sein(e) Mittel auf:
- Mittel zum Umschalten des Roboters in einen Vorgabe-Betriebsmodus und/oder Mittel zum Ausgeben eines Start- und/oder Stoppsignals des Erfassens der Roboterdaten an eine Bedienperson zum Vorgeben des Beaufschlagungsmuster-Befehls-Lexikons;
- Mittel zum Erfassen mehrerer Sequenzen von Roboterdaten zur Eingabe desselben Beaufschlagungsmusters und/oder Roboterbefehls, insbesondere durch verschiedene Bedienpersonen bewirkte Sequenzen und/oder wenigstens eine vorgegebene Mindestzahl von Sequenzen und/oder bis eine vorgegebene Zuverlässigkeit ermittelt wird; und/oder
- Mittel zum Deep Learning, insbesondere zum Trainieren und/oder Validieren eines neuronalen Netzes.

Nach einer hier offenbarten Ausführung ist ein System zur Eingabe wenigstens eines Roboterbefehls, insbesondere hard- und/oder software-, insbesondere programmtechnisch, zur Durchführung eines hier beschriebenen Verfahrens eingerichtet und/oder weist auf:
Mittel zum Erfassen von Roboterdaten, insbesondere jeweils einer Sequenz von Roboterdaten für mehrere Zeiträume; und
Mittel zum Ermitteln eines Beaufschlagungsmusters eines nach einem hier beschriebenen Verfahren bzw. durch ein hier beschriebenes System vorgegebenen Beaufschlagungsmuster-Befehls-Lexikons zugeordneten Roboterbefehls auf Basis der erfassten Roboterdaten, insbesondere einer der erfassten Sequenzen, mithilfe des Modells mit dem maschinell gelernten Beaufschlagungsmuster.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Die CPU kann insbesondere eine Graphikarte (GPU) und/oder wenigstens ein(en) Neural Computing Chip aufweisen, insbesondere sein. Ein Speichersystem kann ein oder mehrere, insbesondere verschiedene, Speichermedien, insbesondere optische, magnetische, Festkörperund/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann. Ein Computerprogrammprodukt kann in einer hier offenbarten Ausführung ein, insbesondere nicht-flüchtiges, Speichermedium zum Speichern eines Programms bzw. mit einem darauf gespeicherten Programm aufweisen, insbesondere sein, wobei ein Ausführen dieses Programms ein System bzw. eine Steuerung, insbesondere einen Computer, dazu veranlasst, ein hier beschriebenes Verfahren bzw. einen oder mehrere seiner Schritte auszuführen.

In einer hier offenbarten Ausführung werden ein oder mehrere, insbesondere alle, Schritte des Verfahrens vollständig oder teilweise automatisiert durchgeführt, insbesondere durch das System bzw. sein(e) Mittel.

In einer hier offenbarten Ausführung weist das System den Roboter auf und/oder steuert den Roboter auf Basis des bzw. der eingegebenen Roboterbefehle und/oder eines hiermit erstellten und/oder modifizierten Arbeitsprogramms bzw. ist hierzu, insbesondere hard- und/oder software-, insbesondere programmtechnisch, eingerichtet.

In einer hier offenbarten Ausführung wird bzw. ist der Roboter zum Erfassen von Roboterdaten zum Vorgeben des Beaufschlagungsmuster-Befehls-Lexikons bzw. (ersten und/oder weiteren) Beaufschlagungsmusters, insbesondere im Vorgabe-Betriebsmodus, und/oder zur Eingabe wenigstens eines Roboterbefehls auf Basis des Beaufschlagungsmuster-Befehls-Lexikons bzw. Beaufschlagungsmusters, insbesondere im Eingabe-Betriebsmodus, nachgiebig gesteuert, in einer hier offenbarten Ausführung durch Gravitationskompensation, Impedanz- oder Admittanzregelung oder dergleichen. Zur kompakteren Darstellung wird vorliegend auch ein Regeln als Steuern im Sinne der vorliegenden Erfindung bezeichnet.

Weitere Vorteile und Merkmale ergeben sich aus den Unteransprüchen und den Ausführungsbeispielen. Hierzu zeigt, teilweise schematisiert:
- Fig. 1:: ein Verfahren zum Vorgeben eines Beaufschlagungsmuster-Befehls-Lexikons und zur Eingabe wenigstens eines Roboterbefehls nach einer Ausführung der vorliegenden Erfindung; und
- Fig. 2:: ein System zur Durchführung des Verfahrens nach einer Ausführung der vorliegenden Erfindung.

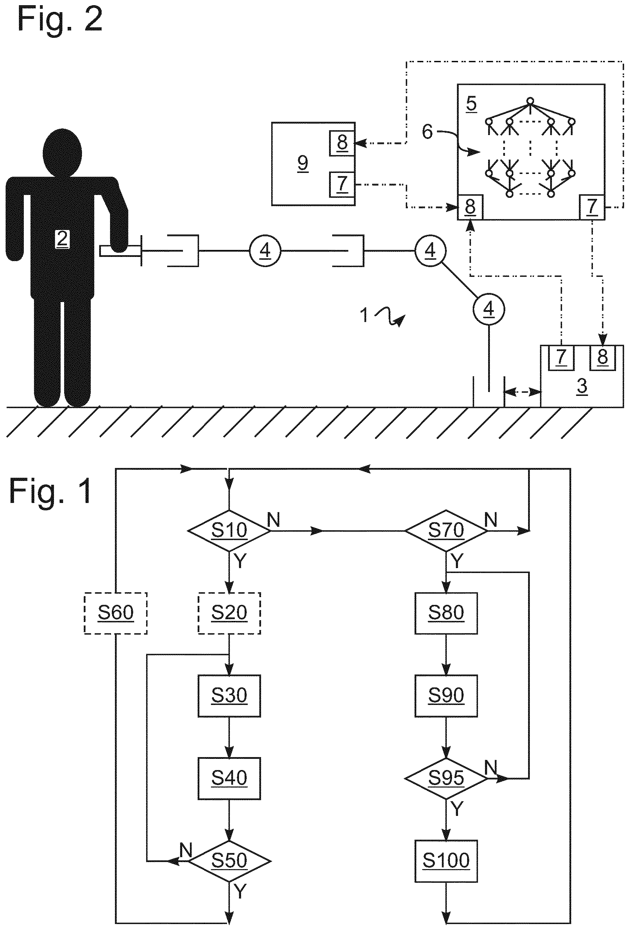

Fig. 2 zeigt ein System zur Durchführung eines Verfahrens zum Vorgeben eines Beaufschlagungsmuster-Befehls-Lexikons und zur Eingabe wenigstens eines Roboterbefehls nach einer Ausführung der vorliegenden Erfindung, welches in Fig. 1 gezeigt ist.

Das System weist einen Roboter 1 auf, der durch eine Bedienperson 2 handgeführt wird. Eine Robotersteuerung 3 erfasst mittels Sensoren 4 Stellungen von und/oder Kräfte an Achsen bzw. Antrieben und übermittelt entsprechende Roboterdaten, die zusätzlich oder alternativ auch kartesische Posen von und/oder Kräfte an Robotergliedern umfassen können, an ein Mittel 5 zum maschinellen Lernen, das ein neuronales Netz 6 aufweist.

Im Ausführungsbeispiel kommuniziert das Mittel 5 mit der Robotersteuerung 3 und einem Ein-/Ausgabemittel einer Mensch-Maschine-Schnittstelle 9 über OPC UA Server 7 und OPC UA Clients 8.

In einem Schritt S10 des Verfahrens (vgl. Fig. 1) wird zunächst geprüft, ob ein Vorgabe-Betriebsmodus gewählt ist.

Ist dies der Fall (S10: "Y"), wird in einem Schritt S20 auf Basis einer Eingabe der Bedienperson 2 mithilfe des Ein-/Ausgabemittels der Mensch-Maschine-Schnittstelle 9 ein Roboterbefehl vorgegeben, der gelernt werden soll. In einer Abwandlung wird stattdessen der Bedienperson 2 mithilfe des Ein-/Ausgabemittel der Mensch-Maschine-Schnittstelle 9 ein zu lernender Roboterbefehl signalisiert.

In einem Schritt S30 wird nun über das Ein-/Ausgabemittel der Mensch-Maschine-Schnittstelle 9 ein Startsignal an die Bedienperson 2 ausgegeben, ab dem für einen vorgegebenen Zeitraum eine Sequenz der Roboterdaten erfasst wird. Am Ende des Erfassungszeitraums bzw. der Sequenz wird ein Stoppsignal ausgegeben.

Die Bedienperson 2 prägt durch Handführen des Roboters 1 ein Beaufschlagungsmuster auf diesen auf, drückt und/oder zieht beispielsweise mit variierenden Kräften an einem oder mehreren Robotergliedern.

In einem Schritt S40 lernt das neuronale Netz 6 auf Basis der in Schritt S30 erfassten Sequenz von Roboterdaten dieses Beaufschlagungsmuster und ordnet ihm dabei den zuvor in Schritt S20 vorgegebenen bzw. signalisierten Roboterbefehl zu.

In einem Schritt S50 wird geprüft, ob bei diesem maschinellen Lernen, das neben einer Lern- auch eine Validierungsphase auf Basis weiterer Sequenzen von Roboterdaten umfasst, bereits eine vorgegebene Mindestzuverlässigkeit erreicht worden ist.

Solange dies nicht der Fall ist (S50: "N"), werden die Schritte S30 - S50 wiederholt, d.h. die oder eine weitere Bedienperson durch erneute Ausgabe des Startsignals zur Wiederholung des Beaufschlagungsmusters aufgefordert, eine neue Sequenz von Roboterdaten erfasst und das Beaufschlagungsmuster auf Basis dieser neuen Sequenz maschinell gelernt, insbesondere das neuronale Netz 6 trainiert bzw. validiert.

Wurde die vorgegebene Mindestzuverlässigkeit erreicht (S50: "Y"), kehrt das Verfahren bzw. System zu Schritt S10 zurück.

In einer Abwandlung entfällt Schritt S20, d.h. die Vorgabe bzw. Signalisierung des Roboterbefehls vor der Erfassung der Roboterdaten(sequenzen). Stattdessen wird zunächst nur das Beaufschlagungsmuster in der vorstehend erläuterten Weise gelernt und diesem erst anschließend in einem Schritt S60 ein entsprechender Roboterbefehl zugeordnet, der beispielsweise über die Ein-/Ausgabemittels der Mensch-Maschine-Schnittstelle 9 eingegeben wird. Die Schritte S20, S60 sind daher gestrichelt dargestellt.

Auf diese Weise können Roboterbefehlen, die vorab von der Bedienperson 2 vorgegeben oder ihr signalisiert (S20) oder anschließend von ihr vorgegeben werden (S60), Beaufschlagungsmuster zugeordnet werden, die das neuronale Netz 6 durch ausreichend häufiges Wiederholen lernt.

Ist der Vorgabe-Betriebsmodus nicht gewählt (S10: "N"), wird in einem Schritt S70 geprüft, ob ein Eingabe-Betriebsmodus gewählt ist.

Ist dies nicht der Fall (S70: "N"), kehrt das Verfahren bzw. System zu Schritt S10 zurück.

Ist hingegen der Eingabe-Betriebsmodus gewählt (S70: "Y"), wird in einem Schritt S80 für den vorgegebenen Zeitraum eine Sequenz der Roboterdaten erfasst.

In einem Schritt S90 versucht das neuronale Netz 6, hierin eines der gelernten Beaufschlagungsmuster mit ausreichender Zuverlässigkeit zu identifizieren bzw. einen diesem zugeordneten Roboterbefehl zu ermitteln.

Gelingt dies (S95: "Y"), wird der Roboterbefehl an die Robotersteuerung 3 ausgegeben (S100).

Andernfalls (S95: "N") kehrt das Verfahren bzw. System zu Schritt S80 zurück, in dem eine weitere Sequenz der Roboterdaten erfasst wird, die die vorhergehende Sequenz zeitlich teilweise überlappt, beispielsweise, indem ältere Zeitwerte entfallen und neuere Zeitwerte hinzukommen.

Auf diese Weise wird in dem Eingabe-Betriebsmodus fortlaufend versucht, in einer der einander zeitlich teilweise überlappenden Sequenzen der Roboterdaten eines der gelernten Beaufschlagungsmuster mit ausreichender Zuverlässigkeit zu identifizieren bzw. einen diesem zugeordneten Roboterbefehl zu ermitteln und der erste solcherart im Eingabe-Betriebsmodus ermittelte Roboterbefehl ausgegeben.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 1: Roboter
- 2: Bedienperson
- 3: Robotersteuerung
- 4: Sensoren
- 5: Mittel zum maschinellen Lernen
- 6: neuronales Netz (Modell)
- 7: OPC UA Server
- 8: OPC UA Client
- 9: (Ein-/Ausgabemittel einer) Mensch-Maschine-Schnittstelle

## Patentansprüche

1. Verfahren zum Vorgeben eines Beaufschlagungsmuster-Befehls-Lexikons mit wenigstens einem Beaufschlagungsmuster zur Eingabe eines Roboterbefehls, wobei wenigstens ein Beaufschlagungsmuster des Beaufschlagungsmuster-Befehls-Lexikons einen Zeitverlauf von Roboterdaten und/oder Schwellwerte für Roboterdaten aufweist;
mit den Schritten:
- Vorgabe (S20) eines Roboterbefehls, der gelernt werden soll, auf Basis einer Eingabe einer Bedienperson (2) mithilfe eines Ein-/Ausgabemittels einer Mensch-Maschine-Schnittstelle (9);
- Aufprägen eines Beaufschlagungsmusters wenigstens eines Gliedes des Roboters (1) durch Handführen des Roboters (1) durch die Bedienperson (2);
- Erfassen (S30) von Roboterdaten dieses Beaufschlagungsmusters, die Werte eines Zeitverlaufs wenigstens einer Pose einer roboterfesten Referenz und/oder eines Zeitverlaufs wenigstens einer Zeitableitung einer Pose einer roboterfesten Referenz und/oder eines Zeitverlaufs wenigstens einer Kraft an einer roboterfesten Referenz und/oder eines Zeitverlaufs wenigstens einer Antriebsgröße des Roboters (1) aufweisen, wobei ein Startsignal und/oder ein Stoppsignal des Erfassens der Roboterdaten an eine Bedienperson (2) ausgegeben wird (S30);
- maschinelles Lernen (S40) des Beaufschlagungsmusters in einem Modell (6) auf Basis der erfassten Roboterdaten, wobei das Modell (6) ein erstes maschinell gelerntes Beaufschlagungsmuster einem ersten Roboterbefehl zuordnet; und
- Zuordnen (S40; S60) des maschinell gelernten Beaufschlagungsmusters zu dem Roboterbefehl;
**dadurch gekennzeichnet, dass**
mehrere Sequenzen von Roboterdaten zur Eingabe desselben Roboterbefehls erfasst werden, wobei diese Sequenzen durch verschiedene Bedienpersonen bewirkte Sequenzen aufweisen,
wobei gezielt auch Roboterdaten zum Lernen des Beaufschlagungsmusters verwendet werden, die bei Beaufschlagung durch die Bedienperson vorgegeben werden und denen der Roboterbefehl nicht zugeordnet werden soll.

2. Verfahren nach Anspruch 1, **dadurch gekennzeichnet, dass** der Roboterbefehl bei oder nach dem maschinellen Lernen des Beaufschlagungsmusters zugeordnet wird.

3. Verfahren nach einem der vorhergehenden Ansprüche, **dadurch gekennzeichnet, dass** der Roboterbefehl
- einen Programmierbefehl zum Erstellen oder Modifizieren eines Arbeitsprogramms des Roboters (1) und/oder
- ein Steuerkommando zum Bedienen des Roboters (1) und/oder einer Roboterperipherie aufweist.

4. Verfahren nach einem der vorhergehenden Ansprüche, **dadurch gekennzeichnet, dass** zum Vorgeben des Beaufschlagungsmuster-Befehls-Lexikons der Roboter (1) in einen Vorgabe-Betriebsmodus umgeschaltet wird.

5. Verfahren nach einem der vorhergehenden Ansprüche, **dadurch gekennzeichnet, dass** das maschinelle Lernen Deep Learning, insbesondere ein Trainieren und/oder Validieren eines neuronalen Netzes (6), aufweist.

6. Verfahren zur Eingabe wenigstens eines Roboterbefehls, mit den Schritten:
- Vorgeben eines Beaufschlagungsmuster-Befehls-Lexikons mit wenigstens einem Beaufschlagungsmuster zur Eingabe eines Roboterbefehls mittels des Verfahrens nach einem der Ansprüche 1 bis 5;
- Erfassen (S80) von Roboterdaten, die Werte eines Zeitverlaufs wenigstens einer Pose einer roboterfesten Referenz und/oder eines Zeitverlaufs wenigstens einer Zeitableitung einer Pose einer roboterfesten Referenz und/oder eines Zeitverlaufs wenigstens einer Kraft an einer roboterfesten Referenz und/oder eines Zeitverlaufs wenigstens einer Antriebsgröße des Roboters (1) aufweisen; und
- Ermitteln (S90) eines Roboterbefehls, der einem Beaufschlagungsmuster eines Beaufschlagungsmuster-Befehls-Lexikons zugeordnet ist, auf Basis der erfassten Roboterdaten mithilfe des Modells (6) mit dem maschinell gelernten Beaufschlagungsmuster.

7. Verfahren nach dem vorhergehenden Anspruch, **dadurch gekennzeichnet, dass** für mehrere Zeiträume jeweils eine Sequenz von Roboterdaten erfasst (S80) und mithilfe des Modells ein Roboterbefehl auf Basis einer der erfassten Sequenzen ermittelt wird (S90).

8. Verfahren nach einem der vorhergehenden Ansprüche 6-7, **dadurch gekennzeichnet, dass** wenigstens ein Beaufschlagungsmuster des Beaufschlagungsmuster-Befehls-Lexikons durch manuelle Bewegung wenigstens eines Glieds des Roboters aufgeprägt wird.

9. Verfahren nach einem der vorhergehenden Ansprüche 6-8, **dadurch gekennzeichnet, dass** die zur Eingabe des Roboterbefehls erfassten Roboterdaten einen Betriebsmodus, insbesondere ein aktuelles Arbeitsprogramm des Roboters (1), aufweisen und/oder wenigstens teilweise durch wenigstens einen roboterseitigen Sensor (4) erfasst werden.

10. System zum Vorgeben eines Beaufschlagungsmuster-Befehls-Lexikons mit wenigstens einem Beaufschlagungsmuster zur Eingabe eines Roboterbefehls, wobei das System einen Roboter (1), eine Robotersteuerung (3) und Sensoren (4) aufweist, wobei das System zur Durchführung eines Verfahrens nach einem der vorhergehenden Ansprüche 1-9 eingerichtet ist.

11. Computerprogrammprodukt mit einem Programmcode, der auf einem von einem Computer lesbaren Medium gespeichert ist, umfassend Befehle, die bewirken, dass das System des Anspruchs 10 die Verfahrensschritte nach einem der vorhergehenden Ansprüche 1-9 ausführt.

## Claims

1. A method of specifying an actuation pattern command lexicon comprising at least one actuation pattern for inputting a robot command, wherein at least one actuation pattern of the actuation pattern command lexicon has a progression over time of robot data and / or threshold values for robot data;
wherein the method comprises the steps of:
- specifying (S20) a robot command which is to be learnt, on the basis of an input from an operator (2) with the aid of an input / output means of a human-machine interface (9);
- applying an actuation pattern of at least one member of the robot (1) by manually guiding the robot (1) by the operator (2);
- acquiring (S30) robot data of this actuation pattern, which robot data comprise values of a progression over time of at least one pose of a reference fixed with respect to the robot and / or a progression over time of at least one time derivative of a pose of a reference fixed with respect to the robot and / or a progression over time of at least one force at a reference fixed with respect to the robot and / or a progression over time of at least one drive variable of the robot (1), wherein a start signal and / or a stop signal of the acquisition of the robot data is output (S30) to an operator (2);
- machine learning (S40) the actuation pattern in a model (6) on the basis of the acquired robot data, wherein the model (6) assigns a first actuation pattern learned by machine learning to a first robot command; and
- assigning (S40; S60) the actuation pattern learned by machine learning to the robot command;
**characterised in that**
a plurality of sequences of robot data for inputting the same robot command are acquired, wherein these sequences comprise sequences effected by different operators, wherein robot data that are specified by the operator in the course of the actuation and to which the robot command should not be assigned are also used specifically for learning the actuation pattern.

2. The method according to claim 1, **characterised in that** the robot command is assigned during the course of, or after, the machine learning of the actuation pattern.

3. The method according to any one of the preceding claims, **characterised in that** the robot command
- comprises a programming command for creating or modifying a work programme of the robot (1) and / or
- comprises a control command for operating the robot (1) and / or a robot periphery.

4. The method according to any one of the preceding claims, **characterised in that**, in order for the actuation pattern command lexicon to be specified, the robot (1) is switched to a specifying-type mode of operation.

5. The method according to any one of the preceding claims, **characterised in that** the machine learning comprises deep learning, in particular training and / or validation of a neural network (6).

6. A method of inputting at least one robot command, the method comprising the steps of:
- specifying an actuation pattern command lexicon comprising at least one actuation pattern for inputting a robot command by means of the method according to any one of claims 1 to 5;
- acquiring (S80) robot data which comprise values of a progression over time of at least one pose of a reference fixed with respect to the robot and / or a progression over time of at least one time derivative of a pose of a reference fixed with respect to the robot and / or a progression over time of at least one force at a reference fixed with respect to the robot and / or a progression over time of at least one drive variable of the robot (1); and
- determining (S90) a robot command which is associated with an actuation pattern of an actuation pattern command lexicon, on the basis of the acquired robot data and with the aid of the model (6) with the machine-learned actuation pattern.

7. The method according to the preceding claim, **characterised in that** a sequence of robot data is acquired (S80) respectively for each of a plurality of periods of time, and, with the aid of the model, a robot command is determined (S90) on the basis of one of the acquired sequences.

8. The method according to any one of the preceding claims 6 - 7, **characterised in that** at least one actuation pattern of the actuation pattern command lexicon is applied by manual movement of at least one member of the robot.

9. The method according to any one of the preceding claims 6 - 8, **characterised in that** the robot data which have been acquired for inputting the robot command comprise a mode of operation, in particular a current work program of the robot (1), and / or are acquired at least partially by at least one sensor (4) on the robot side.

10. A system for specifying an actuation pattern command lexicon comprising at least one actuation pattern for inputting a robot command, wherein the system comprises a robot (1), a robot controller (3) and sensors (4), wherein the system is adapted to carry out a method in accordance with any one of the preceding claims 1 - 9.

11. A computer program product comprising a program code which is stored on a computer readable medium, wherein the program code comprises instructions that cause the system of claim 10 to carry out the method steps in accordance with any one of the preceding claims 1 - 9.

## Revendications

1. Procédé de spécification d'un lexique d'instructions de modèle d'actionnement avec au moins un modèle d'actionnement destiné à entrer une instruction pour robot, dans lequel au moins un modèle d'actionnement du lexique d'instructions de modèle d'actionnement présente une variation dans le temps de données de robot et/ou de valeurs de seuil pour des données de robot ;
avec les étapes :
- de spécification (S20) d'une instruction pour robot, qui est censée être apprise, sur la base d'une entrée d'un opérateur (2) à l'aide d'un moyen d'entrée/de sortie d'une interface homme-machine (9) ;
- d'application d'un modèle d'actionnement d'au moins un organe du robot (1) par manipulation du robot (1) par l'opérateur (2) ;
- de détection (S30) de données de robot dudit modèle d'actionnement, qui présentent des valeurs d'une variation dans le temps d'au moins une pose d'une référence propre au robot et/ou d'une variation dans le temps d'au moins une dérivée temporelle d'une pose d'une référence propre au robot et/ou d'une variation dans le temps d'au moins une force sur une référence propre au robot et/ou d'une variation dans le temps d'au moins une grandeur d'entraînement du robot (1), dans lequel un signal de démarrage et/ou un signal d'arrêt de la détection des données de robot sont envoyés à un opérateur (2) (S30) ;
- d'apprentissage machine (S40) du modèle d'actionnement dans un modèle (6) sur la base des données de robot détectées, dans lequel le modèle (6) associe un premier modèle d'actionnement ayant fait l'objet d'un apprentissage machine à une première instruction pour robot ; et
- d'association (S40 ; S60) du modèle d'actionnement ayant fait l'objet d'un apprentissage machine à l'instruction pour robot ;
**caractérisé en ce que**
plusieurs séquences de données de robot sont détectées pour entrer cette même instruction pour robot, dans lequel lesdites séquences présentent des séquences entraînées par des opérateurs différents,
dans lequel des données de robot sont utilisées également de manière ciblée pour apprendre le modèle d'actionnement, qui sont spécifiées lors de l'actionnement par l'opérateur et auxquelles l'instruction pour robot n'est pas censée être associée.

2. Procédé selon la revendication 1, **caractérisé en ce que** l'instruction pour robot est associée lors ou après l'apprentissage machine du modèle d'actionnement.

3. Procédé selon l'une quelconque des revendications précédentes, **caractérisé en ce que** l'instruction pour robot présente
- une instruction de programmation pour créer ou modifier un programme de travail du robot (1) et/ou
- une commande de pilotage pour utiliser le robot (1) et/ou un périphérique de robot.

4. Procédé selon l'une quelconque des revendications précédentes, **caractérisé en ce que** le robot (1) est passé dans un mode de fonctionnement spécifié pour spécifier le lexique d'instructions de modèle d'actionnement.

5. Procédé selon l'une quelconque des revendications précédentes, **caractérisé en ce que** l'apprentissage machine présente un apprentissage profond, en particulier un entraînement et/ou une validation d'un réseau neuronal (6) .

6. Procédé pour entrer au moins une instruction pour robot, avec les étapes :
- de spécification d'un lexique d'instructions de modèle d'actionnement avec au moins un modèle d'actionnement pour entrer une instruction pour robot au moyen du procédé selon l'une quelconque des revendications 1 à 5 ;
- de détection (S80) de données de robot, qui présentent des valeurs d'une variation dans le temps d'au moins une pose d'une référence propre au robot et/ou d'une variation dans le temps d'au moins une dérivée temporelle d'une pose d'une référence propre au robot et/ou d'une variation dans le temps d'au moins une force sur une référence propre au robot et/ou d'une variation dans le temps d'au moins une grandeur d'entraînement du robot (1) ; et
- de détermination (S90) d'une instruction pour robot, qui est associée à un modèle d'actionnement d'un lexique d'instructions de modèle d'actionnement, sur la base des données de robot détectées à l'aide du modèle (6) avec le modèle d'actionnement ayant fait l'objet d'un apprentissage machine.

7. Procédé selon la revendication précédente, **caractérisé en ce que** respectivement une séquence de données de robot est détectée (S80) pour plusieurs moments, et une instruction pour robot est déterminée (S90) à l'aide du modèle sur la base d'une des séquences détectées.

8. Procédé selon l'une quelconque des revendications précédentes 6 - 7, **caractérisé en ce qu'**au moins un modèle d'actionnement du lexique d'instructions de modèle d'actionnement est appliqué par déplacement manuel d'au moins un organe du robot.

9. Procédé selon l'une quelconque des revendications précédentes 6 - 8, **caractérisé en ce que** les données de robot détectées pour entrer l'instruction pour robot présentent un mode de fonctionnement, en particulier un programme de travail instantané du robot (1) et/ou sont détectées au moins en partie par au moins un capteur (4) côté robot.

10. Système pour spécifier un lexique d'instructions de modèle d'actionnement avec au moins un modèle d'actionnement pour entrer une instruction pour robot, dans lequel le système présente un robot (1), un dispositif de pilotage de robot (3) et des capteurs (4), dans lequel le système est mis au point pour mettre en œuvre un procédé selon l'une quelconque des revendications précédentes 1- 9.

11. Produit de programme informatique avec un code de programme, qui est mémorisé sur un support lisible par un ordinateur, comprenant des instructions, qui ont pour effet que le système de la revendication 10 exécute les étapes de procédé selon l'une quelconque des revendications 1 - 9.
